Europäisches Patentamt

(19) European Patent Office

Office européen des brevets

(11) Veröffentlichungsnummer: **0 031 425**
**B1**

(12) **EUROPÄISCHE PATENTSCHRIFT**

(45) Veröffentlichungstag der Patentschrift:
31.10.84

(51) Int. Cl.³: **C 08 J 9/00**

(21) Anmeldenummer: 80106868.5

(22) Anmeldetag: 07.11.80

(54) Verfahren zur Herstellung von Verbundschaumstoffen.

(30) Priorität: 07.12.79 DE 2949392

(43) Veröffentlichungstag der Anmeldung:
08.07.81 Patentblatt 81/27

(45) Bekanntmachung des Hinweises auf die Patenterteilung:
31.10.84 Patentblatt 84/44

(84) Benannte Vertragsstaaten:
AT BE CH DE FR GB IT LI NL SE

(56) Entgegenhaltungen:
DE - A - 2 328 780
FR - A - 1 514 957
FR - A - 1 533 420
GB - A - 1 183 371
US - A - 3 717 597

CHEMICAL ABSTRACTS, Band 87, Nr. 8, 22. August
1977, Zusammenfassung 54239z COLUMBUS, OHIO
(US)

(73) Patentinhaber: METZELER SCHAUM GMBH,
Donaustrasse 51, D-8940 Memmingen (DE)

(72) Erfinder: Baatz, Günther, Dr., Zimmermannstrasse 2,
D-8941 Buxheim (DE)
Erfinder: Riemhofer, Franz, Dr., Grenzhofstrasse 9 1/2,
D-8940 Memmingen (DE)
Erfinder: Conrad, Klaus-Dieter, Dr., Kapellenweg 8,
D-8940 Memmingen (DE)

(74) Vertreter: Michells, Theodor, Dipl.-Ing.,
Gneisenaustrasse 15, D-8000 München 50 (DE)

# 0 031 425

**Beschreibung**

Die Erfindung betrifft ein Verfahren zur Herstellung von Verbundschaumstoffen aus Schaumstoff-Flocken, Polyurethan-Bindemitteln und zusätzlichen, festen Bestandteilen, die eine Modifizierung oder Veränderung der Eigenschaften des Verbundschaumstoffes bewirken, durch Vermischen der Schaumstoff-Flocken mit einem Polyurethan-bildenden Bindemittel und den zusätzlichen, festen Bestandteilen und Verkleben der Schaumstoff-Flocken durch anschließendes Aushärten des erhaltenen Gemisches unter Druck und gegebenenfalls Wärme.

Bei einem bekannten Verfahren zur Herstellung von Verbundschaumstoffen werden Flocken aus Schaumstoffresten, in der Regel aus weichelastischen Polyurethan-Schaumstoffen, mit Bindemitteln, die ebenfalls auf Polyurethan-Rohstoffen basieren, vermischt und unter Druck und gegebenenfalls Wärme miteinander verbunden. Dabei wird im allgemeinen mit Isocyanat-Gruppen enthaltenden Prepolymeren als Bindemittel gearbeitet und die Aushärtung mittels heißen Wasserdampfes durchgeführt, der als Wärmeträger und gleichzeitig als Vernetzer für das Prepolymere dient.

Die Eigenschaften der auf diese Weise erhaltenen Verbundschaumstoffe sind zwar für eine Reihe von eher untergeordneten Einsatzzwecken ausreichend, ermöglichen jedoch in vielen Fällen eine Verwendung dieser Produkte nicht, da beispielsweise die Bruchdehnung bzw. Zugfestigkeit zu gering ist. Auch das Aussehen derartiger Verbundschaumstoffe, die in der Regel aus beliebigen Gemischen von Flocken aus verschieden gefärbten Schaumstoffen hergestellt werden, läßt erheblich zu wünschen übrig und wird in vielen Fällen durch Zusatz größerer Mengen teurer Farbpasten zum Bindemittel verbessert. Es werden deshalb einfache und kostengünstige Verfahren benötigt, die den so hergestellten Verbundschaumstoffen ein gleichmäßiges Aussehen geben.

Aus der DE-AS 1 629 666 ist bekannt, daß Bahnen aus nicht thermoplastischen Schaumstoffen mit thermoplastischen Eigenschaften versehen, d. h., verform- und verschweißbar gemacht werden können, indem kleine Teilchen, also Flocken, des nicht thermoplastischen Schaumstoffes mit thermoplastischem Kunststoff vermischt, in Bahnform gebracht, dann durch Unterdruck und Wärme verdichtet und anschließend abgekühlt werden. Zur Erzielung guter Verform- und Verschweißeigenschaften sind jedoch relativ große Mengen des thermoplastischen Kunstoffs erforderlich, mit dem die Flocken durchtränkt werden. Es hat sich gezeigt, daß solche Verbundmaterialien nicht ausreichend wärmebeständig sind, da sich unter dem Einfluß höherer Temperaturen die eingesetzten Schaumstoff-Flocken zurückstellen und so zu Maßänderungen oder sogar zum Zerfall der Verbundbahn führen.

Aus der US-PS 3 114 722 ist ein Verfahren zur Herstellung von Verbundschaumstoffen bekannt, bei dem die Schaumstoff-Flocken zunächst mit Dispersionen oder Lösungen eines Katalysators und anschließend mit einem Prepolymeren vermischt werden.

Verfahren zur Herstellung von Verbundschaumstoffen aus Schaumstoff-Flocken, Polyurethan-Bindemitteln und zusätzlichen festen Bestandteilen sind aus der US-PS 3 717 597 sowie aus dem Referat zur japanischen Patentpublikation 117 766/1975, referiert in CPI-ProfiteBooklet 1977, Referat 89 734 X/48 bekannt. Dabei werden feste Bestandteile verwendet, die eine Modifizierung oder Veränderung der Eigenschaften des Verbundschaumstoffes bewirken. Bei diesem Verfahren werden die Schaumstoff-Flocken mit einem Polyurethan-bildenden Bindemittel und den zusätzlichen festen Bestandteilen vermischt und die Schaumstoff-Flocken durch anschließendes Aushärten des erhaltenen Gemisches unter Druck und gegebenenfalls Wärme verklebt.

Bei den bekannten Herstellungsverfahren für Verbundschaumstoffe sind die Eigenschaften der Endprodukte, also der Verbundschaumstoffe, im wesentlichen durch die Art der verwendeten Schaumstoff-Flocken und des Bindemittels vorgegeben. Eine Modifizierung oder Änderung dieser Eigenschaften ist nur mit relativ großem Aufwand möglich, da die zusätzlichen, festen Bestandteile im allgemeinen auf mechanischem Wege in das Gemisch aus den Schaumstoff-Flocken und den Polyurethan-Bindemitteln eingebracht und homogen vermischt werden müssen, damit die daraus hergestellten Verbundschaumstoffe über ihr gesamtes Volumen sehr homogene und gleichmäßige Eigenschaften haben.

Der Erfindung liegt deshalb die Aufgabe zugrunde, ein Verfahren zur Herstellung von Verbundschaumstoffen aus Schaumstoff-Flocken, Polyurethan-Bindemitteln und zusätzlichen festen Bestandteilen der angegebenen Gattung zu schaffen, bei dem die Einbringung der zusätzlichen festen Bestandteile keine Schwierigkeiten bereitet und deshalb je nach Bedarf Verbund-Schaumstoffe mit unterschiedlichen Eigenschaften hergestellt werden können.

Diese Aufgabe wird erfindungsgemäß dadurch gelöst, daß ein Gemisch aus den Schaumstoff-Flocken, den in Form einer wäßrigen Dispersion und/oder einer wäßrigen Lösung vorliegenden, festen Bestandteilen und dem Bindemittel ausgehärtet wird.

Zweckmäßige Ausführungsformen sind in den Unteransprüchen zusammengestellt.

Die mit der Erfindung erzielten Vorteile beruhen insbesondere darauf, daß die in Form einer wäßrigen Dispersion und/oder einer wäßrigen Lösung vorliegenden zusätzlichen festen Bestandteile auf einfache Weise mit den anderen Bestandteilen homogen vermischt werden können, so daß sich insgesamt eine sehr gleichmäßige Mischung und damit Verbundschaumstoffe mit sehr gleichmäßigen Eigenschaften ergeben. Es ist also kein großer operativer Aufwand für die Herstellung des auszuhärtenden Gemisches erforderlich. Außerdem können viele feste Bestandteile, die den Verbundschaum-

2

0 031 425

stoffen jeweils erstrebenswerte Eigenschaften geben, in Form einer wäßrigen Dispersion und/oder einer wäßrigen Lösung präpariert werden, so daß sich Verbundschaumstoffe mit einer entsprechenden Vielzahl von Eigenschaften herstellen lassen.

Als besonders angestrebte Eigenschaften sollen die Möglichkeit der thermischen Verformbarkeit oder des Hochfrequenzschweißens, die Verbesserung des Brandverhaltens, die Erniedrigung des Oberflächen- und Durchgangswiderstandes oder die Erzielung von mikrobistatischer und mikrobizider Wirkung genannt werden.

Aus »Chemical Abstracts« 1977, 54 239 Z ist ein Verfahren zur Herstellung von feuerfesten, starren Polyurethan-Schäumen bekannt, bei dem Schnitzel aus einem starren Polyurethan-Schaum mit einer wäßrigen Natriumsilikat-Lösung gemischt und dann bei 100° C zwei Stunden lang getrocknet werden. Das nach dieser Trocknung gewonnene, pulverförmige Gemisch wird dann unter Verwendung eines üblichen Treibmittels und der üblichen, Polyurethane bildenden Zusätzen zu dem eigentlichen, starren Polyurethan-Schaum verarbeitet. Es ergibt sich kein Verbundschaumstoff.

Durch die Mischung der Polyurethan-Schaumschnitzel mit der wäßrigen Lösung von Natriumsilikat und die anschließende Trocknung entsteht ein feiner Niederschlag aus Natriumsilikat auf der Oberfläche der Schaumstoffteilchen, der die Feuerfestigkeit des Materials verbessert. Dieses pulverförmige Gemisch aus festen Bestandteilen wird dann mit den üblichen Treibstoffen zu dem starren Schaumstoff verarbeitet.

Als wäßrige Dispersion und/oder wäßrige Lösungen kommen solche infrage, die

Pigmente,
Farbstoffe,
Ruß,
Flammschutzmittel wie z. B. Phosphate z. B. Ammoniumpolyphosphat oder halogenierte Alkylphosphate,
Melamin, Dicyandiamid, Ammelin,
Guanidinchlorid, Thioharnstoff, Aluminiumoxidhydrat etc. und deren Kombinationen,
Polymere wie Homo- und/oder Copolymerisate von z. B.
Vinylacetat,
Vinylchlorid,
Vinylidenchlorid,
Styrol,
Butadien,
Acrylnitril,
Acrylsäure, deren Ester, Säureamide oder Säureamidderivate,
Methylacrylsäure, deren Ester, Säureamide oder Säureamidderivate,
Ethylen,
Propylen,
oder Polyadditionsprodukte wie z. B.
Polyurethane,
Mikrobizide oder Mikrobistatika

oder sonstige Zusatz- oder Hilfsstoffe enthalten.

Bei Verwendung von wäßrigen Polymerdispersionen und/oder Polymer-Lösungen werden die bevorzugt, bei denen die Filmbildungstemperatur des Polymeren unter 70° C, vorzugsweise unter 30° C, liegt. Die Auswahl der geeigneten Polymeren kann auf Grund der jeweils angestrebten Eigenschaften der herzustellenden Verbundschaumstoffe durch wenige Vorversuche recht leicht erfolgen. Das gleiche gilt für die Festlegung der jeweils einzusetzenden Menge an wäßriger Dispersion und/oder Lösung.

Die bevorzugt einzusetzenden Mengen an wäßriger Dispersion und/oder wäßriger Lösung sind den Ansprüchen zu entnehmen.

Als Polyurethan-Bindemittel kommen infrage:

Gemische aus mehrwertigen Alkoholen und Polyisocyanaten, wobei der Anteil des Polyisocyanats in diesem Gemisch die dem mehrwertigen Alkohol äquivalente Menge oder mehr ist, vorzugsweise das 1,5- bis 6fache, insbesondere das 2- bis 4fache der dem mehrwertigen Alkohol äquivalenten Menge an Polyisocyanat beträgt.

Isocyanatgruppen enthaltende Prepolymere aus mehrwertigen Alkoholen und Polyisocyanaten, wobei zur Herstellung des Prepolymeren ein 1,5- bis 6facher, vorzugsweise ein 2- bis 4facher Überschuß an Polyisocyanat gegenüber der dem mehrwertigen Alkohol äquivalenten Menge Polyisocyanat eingesetzt wurde, werden bevorzugt.

Die Art des einzusetzenden Polyurethan-Bindemittels und dessen Menge richtet sich nach dem jeweiligen Einsatzgebiet der erfindungsgemäß hergestellten Verbundschaumstoffe und läßt sich durch wenige Vorversuche schnell ermitteln. Beim Einsatz von Flocken aus weichelastischen Polyurethan-Schaumstoffen werden als mehrwertige Alkohole des Polyurethan-Bindemittels 2—4 Hydroxylgruppen enthaltende Polyether mit Molekulargewichten zwischen 1000 und 10 000, insbesondere

3

zwischen 1500 und 6000, und als Polyisocyanat des Polyurethan-Bindemittels alle bekannten und für die Herstellung von Polyurethan-Schaumstoffen verwendbaren Isocyanate, insbesondere 2,4- und/ oder 2,6-Toluylen-diisocyanat (besonders deren technischen Isomerengemische mit 65 bzw. 80 Gew.-% des 2,4-Isomeren) bevorzugt.

Die bevorzugt einzusetzenden Mengen an Polyurethan-Bindemittel sind den Ansprüchen zu entnehmen.

Zur Herstellung der erfindungsgemäßen Verbundschaumstoffe können die Schaumstoff-Flocken entweder zunächst mit einem Polyurethan-Bindemittel und danach mit einer wäßrigen Dispersion und/oder wäßrigen Lösung oder aber zunächst mit einer wäßrigen Dispersion und/oder wäßrigen Lösung und erst danach mit einem Polyurethan-Bindemittel vermischt werden. Die so erhaltenen Gemische werden dann in an sich bekannter Weise ausgehärtet. Die bevorzugten Aushärtebedingungen sind den Ansprüchen zu entnehmen.

Es hat sich bei Verwendung von wäßrigen Dispersionen und/oder Lösungen von Pigmenten, Farbstoffen, Ruß, Mikrobiziden oder sonstigen Zusatz- oder Hilfsstoffen als zweckmäßig erwiesen, die Schaumstoff-Flocken zunächst mit dem Polyurethan-Bindemittel und erst dann mit den wäßrigen Dispersionen und/oder Lösungen der genannten Stoffe zu vermischen. Dadurch wird erreicht, daß sich die wirksamen Bestandteile der Dispersionen und/oder Lösungen an der Oberfläche der einzelnen Flocken befinden und so ihre Wirkung optimal entfalten.

Bei der Verwendung von wäßrigen Polymer-Dispersionen und/oder wäßrigen Polymer-Lösungen richtet sich die Reihenfolge der Zugabe des Polyurethan-Bindemittels und der wäßrigen Dispersionen und/oder Lösungen nach den Eigenschaften der eingesetzten Polymeren.

Beim Einsatz von wäßrigen Dispersionen und/oder Lösungen von Polymeren, die nur schwer oder erst bei hohen Temperaturen einen Film bilden, ist es zweckmäßig, zunächst das Polyurethan-Bindemittel und erst danach die Dispersion und/oder Lösung des Polymeren den Schaumstoff-Flocken zuzumischen. Dadurch können beispielsweise erfindungsgemäß Verbundschaumstoffe hergestellt werden, die sowohl für eine Reihe von Einsatzgebieten ausreichend fest und temperaturbeständig als auch z. B. thermisch oder durch Hochfrequenzenergie verschweißbar sind.

Die umgekehrte Reihenfolge der Zugabe von zunächst wäßriger Polymer-Dispersion und/oder wäßriger Polymer-Lösung und erst danach des Polyurethan-Bindemittels zu den Schaumstoff-Flocken empfiehlt es sich insbesondere dann, wenn Polymere verwendet werden, die zwar ausgezeichnete Haftung zu den Schaumstoff-Flocken aber alleine unzureichende Festigkeit und Temperaturbeständigkeit des Verbundschaumstoffes ergeben. Durch die erfindungsgemäße Kombination von wäßriger Dispersion und/oder Lösung derartiger Polymerer mit einem Polyurethan-Bindemittel werden Verbundschaumstoffe erhalten, die gegenüber den bekannten nur mit Polyurethan-Bindemittel hergestellten Verbundschaumstoffen erheblich verbesserte Eigenschaften, z. B. höhere Bruchdehnungen und Zugfestigkeiten aufweisen.

Die erfindungsgemäß hergestellten Verbundschaumstoffe können in vielen Gebieten eingesetzt werden, z. B. als Dämpfungsmaterial in der Verpackungsindustrie oder der Automobilindustrie.

Zur weiteren Erläuterung dienen die nachfolgenden Beispiele; alle Teile sind Gewichtsteile.


Beispiel 1


In einem Mischer des Typs FM 300 D der Firma Lödige, Paderborn werden 1,4 kg Polyurethan-Weichschaum-Flocken vorgelegt. Diese werden hergestellt durch Zerkleinern von Polyurethan-Weichschaumresten und Aussieben durch ein Sieb mit 10 mm Maschenweite (10 mm Flocke). Der Mischer wird auf 140 U/min an der Mischerwelle eingestellt. Sodann werden auf 100 Teile Flocken durch einen an der Beschickungsöffnung angebrachten Flüssigkeitszugabestutzen 15 Teile einer 53%igen wäßrigen Dispersion auf Basis eines Copolymerisats aus Vinylacetat und Äthylen zugegeben (Vinnapas LT 441 der Wacker Chemie GmbH, 8000 München 22). Die Gesamtmenge an Dispersion wird innerhalb einer Minute zugegeben.

Anschließend wird während 5 Minuten unter den o. g. Bedingungen weitergemischt. Nach dieser Mischphase werden unter den gleichen Zugabe- und Mischbedingungen auf 100 Tl Flocken 7,5 Tl eines Prepolymers zugegeben, welches hergestellt wurde durch Umsetzung eines verzweigten Polyäthers der Bayer AG (Desmophen 3900, OH-Zahl 35 ± 2, mittleres Molekulargewicht 4800 ± 300) mit einer Mischung von 80% Toluylen-2,4-diisocyanat mit 20% Toluylen-2,6-diisocyanat (Desmodur T 80 der Bayer AG).

Zur Herstellung des Prepolymers werden 100 Tl Desmophen 3900 mit 20,6 Tl Desmodur T 80 unter Rühren vermischt.

Der NCO-Wert nach 24 Stunden beträgt ca. 6,5%. Die Binder enthaltenden Flocken werden sodann in eine Metallform der Grundfläche 40 · 40 cm gegeben. Der Formdeckel wird mit 9 cm Abstand vom Formboden arretiert. Hierdurch werden die Flocken komprimiert und durch Ausheizen in einem Umluft-Trockenschrank bei 140° C während ca. 2 Stunden entsteht ein Formkörper der o. g. Abmessungen.

Hierbei wird der Polymerdispersion zur Filmbildung die äußere Phase entzogen und der hierbei entstehende Wasserdampf sorgt gleichzeitig für die Aushärtung des Prepolymers.

Formdeckel und Formboden sind durchlocht, um das Abdunsten von überschüssigem Wasser zu ermöglichen. Auf ähnliche Weise ist es möglich, mit Hilfe eines regelbaren Gebläses Heißluft von 140—160°C durch eine entsprechend gebaute Form der o. g. Abmessungen zu blasen und dadurch die gleiche Reaktion wie im Umlauf-Trockenschrank, jedoch innerhalb ca. 15 Minuten durchzuführen.

Der resultierende Verbundschaum hat folgende Eigenschaften:

| | |
|---|---|
| Rohdichte | 120 kg/m$^3$ |
| Zugfestigkeit | 71 KPa |
| Bruchdehnung | 84% |
| Stauchhärte bei 40% Verformung | 17,6 KPa |

10 mm starke Platten des Verbundschaumes ließen sich an einem Hochfrequenz-Schweißgenerator der Fa. Kiefel-Körting des Typs G 2000 sb (Arbeitsfrequenz 27,12 Mega-Hertz) einwandfrei verschweißen (bei 2,5 KV; Anodenstrom 0,45 A, Schweißzeit 2 Sek.).

### Beispiel 2

Unter den Bedingungen des Beispiels 1 werden auf 1,4 kg 10 mm Polyurethan-Weichschaumflocken zunächst 7,5 Tl des unter Beispiel 1 beschriebenen Prepolymers pro 100 Tl Flocken zugemischt und anschließend unter den gleichen Mischbedingungen 15 Tl auf 100 Tl Flocken der wäßrigen 55%igen Dispersion eines Vinylidenchlorid-Mischpolymerisats der BASF zugegeben (Diofan 193 D).

Der wie unter Beispiel 1 beschrieben mit Hilfe von Heißluft (15 Minuten ca. 150°C) hergestellte Verbundschaum hat folgende Eigenschaften:

| | |
|---|---|
| Rohdichte | 125 kg/m$^3$ |
| Zugfestigkeit | 45 KPa |
| Bruchdehnung | 52% |
| Stauchhärte bei 40% Verformung | 18,9 KPa |

Hochfrequenz-Verschweißversuch: einwandfrei verschweißbar (bei 2,5 KV, Anodenstrom 0,46 A, Schweißzeit 2,8 Sek.).

### Beispiel 3

Wie in Beispiel 1 beschrieben werden zu 1,4 kg 10 mm Polyurethan-Weichschaumflocken auf 100 Tl Flocken 18,5 Tl einer 40%igen wäßrigen aliphatischen Polyesterurethan-Dispersion (Impranil DLH der Bayer AG) zugemischt.

Als zweite Binderkomponente wird unter den Bedingungen des Beispiels 1 das im gleichen Beispiel aufgeführte Prepolymer zugemischt im Verhältnis 7,5 Tl Prepolymer auf 100 Tl Flocken.

Der durch 2stündiges Erhitzen im Trockenschrank in der im Beispiel 1 geschilderten Metallform entstandene Verbundschaum hat die folgenden Eigenschaften:

| | |
|---|---|
| Rohdichte | 113 kg/m$^3$ |
| Zugfestigkeit | 86 KPa |
| Bruchdehnung | 97% |
| Stauchhärte bei 40% Verformung | 17,6 KPa |

Hochfrequenz-Verschweißversuch wie unter Beispiel 1 beschrieben: einwandfrei verschweißbar (bei 2,5 KV, Anodenstrom 0,4 A, Schweißzeit 2,5 Sek.).

### Beispiel 4a

Um einen Verbundschaum mit vergrößerter Oberflächenleitfähigkeit zu erzeugen, wird das im Beispiel 1 beschriebene Prepolymer unter den dort beschriebenen Mischbedingungen als Binder zu 1,4 kg 6 mm Polyurethan-Weichschaumflocken zugegeben im Verhältnis 15 Teile Prepolymer auf 100 Teile Flocken.

Nach einer Zugabe- und Mischzeit von insgesamt 6 Minuten werden 30 Tl einer 25%igen wäßrigen Rußdispersion auf 100 Tl Flocken zugegeben (AN 1-25/L der Fa. Degussa, Hanau) und während weiterer 5 Minuten Mischzeit gleichmäßig über die Flockenoberfläche verteilt.

Zur Aushärtung des Prepolymers kann zu dem durch die Rußdispersion im System befindlichen Wasser weiteres Wasser zugemischt werden. Die Abbindereaktion wird unter den im Beispiel 1 beschriebenen Bedingungen durchgeführt. Der resultierende Verbundschaum besitzt folgende Eigenschaften:

| | |
|---|---|
| Rohdichte | 118 kg/m³ |
| Zugfestigkeit | 75 KPa |
| Bruchdehnung | 55% |
| Stauchhärte bei 40% Verformung | 30,2 KPa |
| Oberflächenwiderstand | |
| (in Anlehnung an DIN 53 482) | 1,6 · 10⁴ Ohm |

Beispiel 4b

Die Durchführung in Analogie zu Beispiel 4a mit der Änderung, daß 40 Tl Rußdispersion auf 100 Tl Flocken eingesetzt werden, führt zu folgenden Eigenschaften im Verbundschaum:

| | |
|---|---|
| Rohdichte | 124 kg/m³ |
| Zugfestigkeit | 96 kPa |
| Bruchdehnung | 53% |
| Stauchhärte bei 40% Verformung | 30,8 kPa |
| Oberflächenwiderstand | |
| (in Anlehnung an DIN 54 482) | 1,5 · 10³ Ohm |

**Patentansprüche**

1. Verfahren zur Herstellung von Verbundschaumstoffen aus Schaumstoff-Flocken, Polyurethan-Bindemitteln und zusätzlichen festen Bestandteilen, die eine Modifizierung oder Veränderung der Eigenschaften des Verbundschaumstoffes bewirken, durch Vermischen der Schaumstoff-Flocken mit einem Polyurethan-bildenden Bindemittel und den zusätzlichen festen Bestandteilen und Verkleben der Schaumstoff-Flocken durch anschließendes Aushärten des erhaltenen Gemisches unter Druck und gegebenenfalls Wärme, dadurch gekennzeichnet, daß ein Gemisch aus den Schaumstoff-Flocken, den in Form einer wäßrigen Dispersion und/oder einer wäßrigen Lösung vorliegenden festen Bestandteilen und dem Bindemittel ausgehärtet wird.

2. Verfahren nach Anspruch 1, dadurch gekennzeichnet, daß die Schaumstoff-Flocken zunächst mit dem Polyurethan-bildenden Bindemittel und danach mit einer wäßrigen Dispersion und/oder einer wäßrigen Lösung von Pigmenten, Farbstoffen, Ruß, Mikrobiziden oder ähnlichen Zusatz- oder Hilfsstoffen gemischt werden.

3. Verfahren nach einem der Ansprüche 1 oder 2, dadurch gekennzeichnet, daß als Polyurethan-bildendes Bindemittel ein Prepolymeres aus einem mehrwertigen Alkohol und einem Überschuß an Polyisocyanat verwendet wird.

4. Verfahren nach einem der Ansprüche 1 bis 3, dadurch gekennzeichnet, daß die wäßrige Dispersion und/oder die wäßrige Lösung in einer Menge von 0,5 bis 100 Gewichtsteile pro 100 Gewichtsteile Schaumstoff-Flocken verwendet wird.

5. Verfahren nach einem der Ansprüche 1 bis 4, dadurch gekennzeichnet, daß auf 100 Gewichtsteile Schaumstoff-Flocken 10 bis 30 Gewichtsteile Polyurethan-bildendes Bindemittel 0,5 bis 50, vorzugsweise 1 bis 30, Gewichtsteile wäßrige Dispersion und/oder wäßrige Lösung verwendet werden.

6. Verfahren nach einem der Ansprüche 1 bis 5, dadurch gekennzeichnet, daß das Ausreagieren des Gemisches aus Schaumstoff-Flocken, Polyurethan-bildendem Bindemittel und wäßriger Dispersion und/oder wäßriger Lösung unter einem Druck von mindestens 1 kPa durchgeführt wird.

7. Verfahren nach einem der Ansprüche 1 bis 6, dadurch gekennzeichnet, daß das Ausreagieren des Gemisches aus Schaumstoff-Flocken, Polyurethan-bildendem Bindemittel und wäßriger Dispersion und/oder wäßriger Lösung bei Temperaturen über 80°C, vorzugsweise zwischen 100 und 150°C, durchgeführt wird.

8. Verfahren nach einem der Ansprüche 1 bis 7, dadurch gekennzeichnet, daß das Ausreagieren des Gemisches aus Schaumstoff-Flocken, Polyurethan-bildendem Bindemittel und wäßriger Dispersion und/oder wäßriger Lösung in Gegenwart von Wasserdampf durchgeführt wird.

**Claims**

1. A process for the production of compound foams from foam flakes, polyurethane binders and additional solid components which modify or change the properties of the compound foams, by mixing the foam flakes with a polyurethane-forming binder and the additional solid components and conglutinating the foam flakes by subsequently hardening under pressure and optionally under heat the

mixture which is obtained, characterised in that a mixture of the foam flakes, the solid components which are present in the form of an aqueous dispersion and/or an aqueous solution, and the binder is hardened.

2. A process according to claim 1, characterised in that the foam flakes are firstly mixed with the polyurethane-forming binder and then with an aqueous dispersion and/or an aqueous solution of pigments, dyes, carbon black, microbicides or similar additives or auxiliaries.

3. A process according to one of claims 1 or 2, characterised in that a prepolymer of a polyhydric alcohol and an excess of polyisocyanate is used as the polyurethane-forming binder.

4. A process according to one of claims 1 to 3, characterised in that the aqueous dispersion and/or the aqueous solution is used in a quantity of from 0.5 to 100 parts by weight per 100 parts by weight of foam flakes.

5. A process according to one of claims 1 to 4, characterised in that from 10 to 30 parts by weight of polyurethane-forming binder, from 0.5 to 50, preferably from 1 to 30, parts by weight of aqueous dispersion and/or aqueous solution are used per 100 parts by weight of foam flakes.

6. A process according to one of claims 1 to 5, characterised in that the mixture of foam flakes polyurethane-forming binder and aqueous dispersion and/or aqueous solution is reacted to completion under a pressure of at least 1 kPa.

7. A process according to one of claims 1 to 6, characterised in that the mixture of foam flakes, polyurethane-forming binder and aqueous dispersion and/or aqueous solution is reacted to completion at a temperature above 80° C, preferably at a temperature of from 100 to 150° C.

8. A process according to one of claims 1 to 7, characterised in that the mixture of foam flakes, polyurethane-formingbinder and aqueous dispersion and/or aqueous solution is reacted to completion in the presence of water vapour.

**Revendications**

1. Procédé de préparation de mousses composites à partir de flocons de mousse, d'agent liant donnant du polyuréthanne et, en outre, de constituants solides qui provoquent une modification ou un changement des propriétés de la mousse composite, par mélange des flocons de mousse avec un agent liant formant du polyuréthanne et avec les constituants solides supplémentaires et par collage des flocons de mousse en durcissant ensuite le mélange obtenu sous pression et, le cas échéant, par la chaleur, caractérisé en ce qu'il consiste à durcir un mélange constitué des flocons de mousse, des constituants solides se présentant sous la forme d'une dispersion aqueuse et/ou d'une solution aqueuse, et de l'agent liant.

2. Procédé suivant la revendication 1, caractérisé en ce qu'il consiste à mélanger les flocons de mousse d'abord à l'agent liant formant du polyuréthanne et, ensuite, à une dispersion aqueuse et/ou à une solution aqueuse de pigments, de colorants, de suie, de substances microbicides ou d'autres additifs ou adjuvants semblables.

3. Procédé suivant l'une des revendications 1 ou 2, caractérisé en ce qu'il consiste à utiliser comme agent liant formant du polyuréthanne un prépolymère constitué d'un polyalcool et d'un excès de polyisocyanate.

4. Procédé suivant l'une des revendications à 3, caractérisé en ce qu'il consiste à utiliser la dispersion aqueuse et/ou la solution aqueuse en une quantité de 0,5 à 100 parties en poids pour 100 parties en poids de flocons de mousse.

5. Procédé suivant l'une des revendications 1 à 4, caractérisé en ce qu'il consiste à utiliser, pour 100 parties en poids de flocons de mousse, de 10 à 30 parties en poids d'agent liant formant du polyuréthanne, de 0,5 à 50 et, de préférence, de 1 à 30 parties en poids de dispersion aqueuse et/ou de solution aqueuse.

6. Procédé suivant l'une des revendications 1 à 5, caractérisé en ce qu'il consiste à effectuer la réaction du mélange constitué de flocons de mousse d'agent liant formant du polyuréthanne et de dispersion aqueuse et/ou de solution aqueuse, sous une pression d'au moins 1 kPa.

7. Procédé suivant l'une des revendications 1 à 6, caractérisé en ce qu'il consiste à effectuer la réaction du mélange constitué de flocons de mousse, d'agent liant formant du polyuréthanne et de dispersion aqueuse et/ou de solution aqueuse à des températures supérieures à 80°C et, de préférence, comprises entre 100 et 150°C.

8. Procédé suivant l'une des revendications 1 à 7, caractérisé en ce qu'il consiste à effectuer la réaction du mélange constitué de flocons de mousse, d'agent liant formant du polyuréthanne et de dispersion aqueuse et/ou de solution aqueuse en présence de vapeurs d'eau.